# EUROPEAN PATENT SPECIFICATION

(11) **EP 0 835 053 B1**
(45) Date of publication and mention of the grant of the patent: **06.10.1999**
(21) Application number: 96920999.8
(22) Date of filing: 27.06.1996
(51) Int. Cl.: A01M 1/22, A01M 1/00

(54) **INSECT TRAP DEVICE**
INSEKTENFALLE
PIEGE A INSECTES

(30) Priority: 29.06.1995 GB 9513259
(43) Date of publication of application: 15.04.1998
(73) Proprietor: UNIVERSITY OF SOUTHAMPTON, Southampton, Hampshire SO17 1BJ (GB)
(72) Inventor: HOWSE, Philip, Edwin, Hampshire PO12 2NG (GB); HUGHES, John, Farrell, Southampton SO40 2LJ (GB); HEARN, Graham, Leslie, Southampton SO17 1SZ (GB)
(74) Representative: Allard, Susan Joyce
(86) International application number: PCT/GB96/01552
(87) International publication number: WO 97/01273

(56) References cited:
- EP-A- 0 650 322
- WO-A-89/12389
- US-A- 3 699 387
- US-A- 3 751 715

## Description

The present invention relates to insect trap devices and, in particular, to insect trap devices which rely on an ion wind to facilitate dispersal of an insect attractant source.

Numerous trap devices have been developed for trapping insects, including no-exit traps, adhesive retaining traps, insecticide traps and electrical traps which electrocute the insects.

An example of a no-exit trap is the Victorian fly trap. This trap consists of a glass bowl with a central opening. The bowl is disposed such that the dome of the bowl is nearest a light source. Accordingly, insects entering the bowl via the opening continue to fly toward the light source but are trapped due to the presence of the dome.

An example of an adhesive retaining trap is the simple fly-paper, which retains insects on an adhesive surface when they land on it. Insecticide traps are constructed from a material impregnated with an insecticide. When an insect makes contact with the insecticide trap it absorbs insecticide and is killed. A disadvantage associated with fly-paper and insecticide traps is that they are unsightly in operation.

Electrical traps rely on a light source to attract insects. Attracted by the light, insects land on a metal grid raised to a high potential and are electrocuted as they bridge the gap between this grid and an earthed surface lying adjacent thereto. A problem with such devices is the shedding of particulate debris into the air after the insect has been electrocuted. Such debris is an undesirable health hazard, especially in food preparation areas. Additionally, light sources suitable for attracting insects can be damaging to human vision and, furthermore, some insects have now evolved behavioural resistance to light lures and traps of this kind.

EP-A-0650322 describes a method and apparatus for controlling pests in which the pests are exposed to particles carrying an electrostatic charge of opposite polarity to that of the surface of the pest and the particles having a pesticide or a behaviour modifying chemical associated therewith.

WO89/12389 describes a method or arrangement for eradicating insects including the release of an attractant stored in a container from within a housing so as to attract insects into the housing.

Heretofore, insect trap devices have not relied upon an ion wind to facilitate dispersal of an insect attractant source. US 3699387 and US 3751715 describe machines capable of producing ion winds.

Accordingly, the present invention provides an insect trap device comprising a housing having an interior which is in communication with the atmosphere outside the device, the housing containing:
(i) an insect attractant source;
(ii) means for generating an ion wind to facilitate dispersal of the insect attractant source into the atmosphere outside the housing; and
(iii) insect retaining means.

Preferably the means for generating the ion wind comprises a first electrode and a second electrode spaced therefrom to define a region therebetween, such that when an electrical potential is applied across the first and second electrodes an electric field is created in the said region.

The second electrode preferably has at least one opening therein through which the interior of the housing communicates with the atmosphere outside the housing.

Preferably the first electrode has a tip and the second electrode is preferably a ring electrode, a tubular electrode, a grid electrode or a combination of one or more thereof.

In one aspect of the present invention the insect retaining means comprises a surface in the interior of the device coated with an adhesive layer, an insecticide layer, or a combination thereof.

In another aspect of the present invention, the second electrode is, for example, in the form of a tube, grid or mesh coated on its surface with an adhesive layer, an insecticide layer, or a combination thereof for the purpose of retaining insects thereon. In this aspect of the present invention, the second electrode is preferably earthed.

In another aspect of the present invention, the insect retaining means comprises a third electrode positioned adjacent to the second electrode to define a gap therebetween, which gap is capable of being bridged by an insect incident on the second or third electrode. Preferably the third electrode has at least one opening therein through which the interior of the housing communicates with the atmosphere outside the housing. The third electrode is preferably a ring electrode, a tubular electrode, a grid or mesh electrode, a disc electrode, or a combination of one or more thereof. When the device is in operation, i.e when an electrical potential is applied across the first and second electrodes, the third electrode is maintained at a lower potential than the potential across the first and second electrodes. Preferably the third electrode is earthed. The retaining means in this aspect of the present invention may further comprise a surface coated with an adhesive layer, an insecticide layer, or a combination thereof and positioned adjacent to the second and third electrodes. Preferably the surface is earthed.

In yet another aspect of the present invention, the insect retaining means comprises a third electrode positioned substantially between the first and second electrodes such that an insect which has entered the device may be deposited thereon. When the device is in operation, i.e. when an electrical potential is applied across the first and second electrodes, the third electrode is maintained at a lower potential than the potential across the first and second electrodes. In a preferred embodiment of this aspect of the present invention, the third electrode comprises a tubular insert which substantially surrounds the electric field created in the space between the first and second electrodes when an electrical potential is applied across the first and second electrodes. The third electrode is preferably coated with an adhesive layer, an insecticide layer, or a combination thereof and preferably is earthed.

The electrodes in the insect trap device according to the present invention are preferably formed from an electrically conducting material, more preferably from a metallic material, such as copper.

The insect attractant source may be a sexual pheromone or chemical. For houseflies (*Musca domestica*) the sexual pheromone (Z)-9-tricosene is a preferred insect attractant source; whilst for mosquitoes, a carbon dioxide generating source or lactic acid are the preferred attractant sources.

When the device according to the present invention is operating, the electrical potential applied across the first and second electrodes is preferably a d.c. potential, which may be supplied from a mains operated supply, or from a battery. Depending upon the separation of the first and second electrodes, potentials of up to approximately 20 kV may be applied. The preferred polarity is for the first electrode to be negative with respect to the second electrode.

The insect trap device according to the present invention may also comprise an insect retaining mesh. Furthermore, the insect trap device may comprise an air filter to filter out dust and particles in the air which passes through the interior of the device. The air filter is preferably detachable from the insect trap device so that it may be cleaned or replaced, as necessary.

It will be understood that the insect trap device according to the present invention may include additional features which are attractive to insects, such as a source of heat, light or sound, or a combination thereof, or a pulsed air flow.

The present invention also provides a method of trapping insects comprising the steps of:
(1) providing a housing having an interior which is in communication with the atmosphere outside the housing;
(2) providing an insect attractant source in the interior of the housing;
(3) generating an ion wind in the interior of the housing to facilitate dispersal of the insect attractant source into the atmosphere outside the housing; and
(4) retaining the insects which are attracted to the insect attractant source by means of an insect retaining means provided in the interior of the housing.

Additionally, the present invention provides a method of trapping insects comprising the steps of:
(a) providing an insect trap device according to the present invention having a first electrode and a second electrode; and
(b) applying an electrical potential across the first and second electrodes such that the resultant electric field in the region therebetween generates an ion wind which flows towards the second electrode, the ion wind facilitating the dispersal of the insect attractant source into the atmosphere outside the housing, whereby insects in the atmosphere outside the housing are attracted to the insect attractant source and pass through at least one opening in the second electrode into the housing and are retained therein by the insect retaining means.

The insect trap device and method according to the present invention rely on an electric field to facilitate dispersal of an attractant source odour and, additionally, to bring about electrocution of insects or diversion thereof to a surface whereon they may be retained and subsequently killed. It will be understood that the insect trap device and method according to the present invention may also be used to trap other pests such as flying or crawling invertebrate pests, including cockroaches. Additionally, it will be understood that the insect trap device and method according to the present invention may also serve to filter particulate material from the atmosphere.

The invention will now be described by way of example with reference to the following drawings in which:
Fig. 1 shows a schematic sectional drawing of one embodiment of an insect trap device according to the present invention; and
Fig. 2 shows a schematic sectional drawing of another embodiment of an insect trap device according to the present invention.

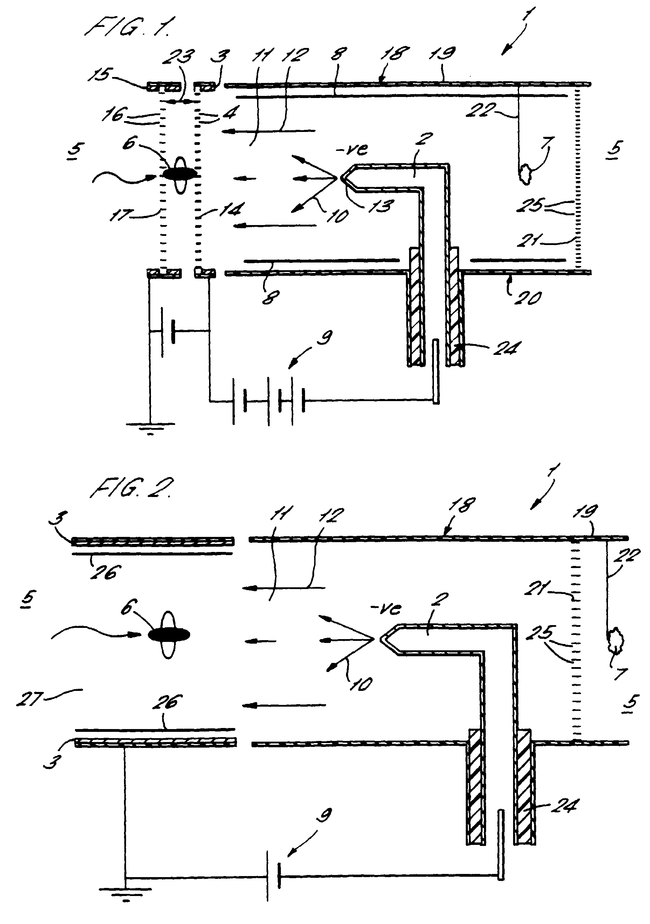

Referring to Fig. 1, an insect trap device 1 of the present invention is shown. The device 1 comprises a housing 18 of a substantially insulating material, such as glass or plastic, having upper and lower sides 19 and 20, respectively. Protruding into the interior of the housing 18 and attached to side 20 is a first electrode 2, comprising an L-shaped copper rod which tapers to a rounded tip 13. A surround 24 is provided to electrically insulate the first electrode 2 from the housing 18.

Second 3 and third 15 electrodes are positioned in the housing 18 at one end thereof. The second electrode 3 is in the form of a grid or mesh 14 having a plurality of openings 4 therein which communicate with the atmosphere 5 outside the device 1. Similarly, the third electrode 15 is also in the form of a grid or mesh 17 having a plurality of openings 16 therein which communicate with the atmosphere 5 outside the device 1. The openings in the grids or meshes 14 and 17 are preferably offset from each other. The openings 4 and 16 are of a size that allows an insect 6 to pass through into the housing 18. Positioned at the other end of the housing 18 is an insect retaining mesh 21 having a plurality of openings 25 therein which communicate with the atmosphere 5 outside the device 1. The openings 25 are of a size that prevents insects passing through the insect retaining mesh 21. Accordingly, air can travel through the housing 18 of the device 1. The retaining mesh 21 may have an air filter associated therewith, as described above.

An insect attractant source 7 is suspended by a wire 22 from the upper side 19 of the housing 18.

When a d.c. electrical potential from a source 9 of 5-20 kV is applied to the first 2 and second 3 electrodes, the potential difference between the first 2 and second 3 electrodes results in an electric field 10 in the space 11 between the electrodes. The electric field 10 in the vicinity of the first electrode 2 is proportional to the electrical potential applied and approximately inversely proportional to the radius of the tip 13 of the copper rod forming the first electrode 2. When the electric field 10 between the first 2 and second 3 electrodes is of sufficient strength, atoms and molecules in the atmosphere in the region near the tip 13 of the first electrode 2 become polarised and are drawn towards the surface of the tip 13. In a complex process, the atoms and molecules then become ionized and are subsequently repelled from the first electrode 2 towards the second electrode 3. This flow of ions in an electric field is termed an "ion wind" and is represented in Fig. 1 by the arrows 12. As the ions in the ion wind travel towards the second electrode 3, they impart kinetic energy to non-ionised particles with which they collide, resulting in an air current which also flows towards the second electrode 3. Since the second 3 and third 15 electrodes have a plurality of openings 4 and 16, respectively therein, the air current flows through the second 3 and third 15 electrodes into the atmosphere 5 outside the housing 18. Accordingly, the odour of the insect attractant source 7 is carried in the flow of the ion wind 12 and is subsequently dispersed in the atmosphere 5 outside the housing 18.

It is well-known that many insects are attracted towards odour sources, which may represent food or mating sources. The most important mechanism involved in this attraction is upwind orientation in the "plume" of the odour carried by air currents passing over an insect attractant source.

An important aspect of the present invention is therefore the novel use of an ion wind generator to produce an odour plume, from an insect attractant source, of controlled low velocity which insects use as an orientation guide to approach the source of the odour.

Accordingly, insects 6 in the atmosphere 5 outside the housing 18 are attracted to the insect attractant source 7 by the odour thereof dispersed in the atmosphere 5. The insects 6 orientate upwind, using the odour plume as a guide, and pass through the openings 16 in the third electrode 15. The third electrode 15 is earthed and positioned adjacent to the second 3 electrode to define a gap 23 therebetween. In order to trap relatively large insects, such as houseflies, the sizes of the openings of the meshes 4 and 16 are chosen so that the insects will pass through the mesh 16 but not through the mesh 4. Alternatively this can be achieved by offsetting the openings in the two meshes. As the insects land on electrode 3 the gap 23 between the electrodes is bridged 6, so producing an electrical short-circuit whereby the insect 6 is electrocuted. It will be understood that the size of the gap 23 is chosen having regard to the dimensions of the insects.

An earthed surface 8 is positioned between the first 2 and second 3 electrodes. The earthed surface 8 comprises a coating of an adhesive layer so that particles of debris from the electrocuted insects which pass through the mesh 14 may be retained thereon.

In order to trap smaller insects, such as mosquitoes, which are able to pass through both of the meshes 17 and 14 a different mechanism operates. As these smaller insects enter the housing 18 by passing through the openings 4 in the mesh 14, they are influenced by the electrical field 10 between the first electrode 2 and the second electrode 3. The insects accumulate electrical charge in the field and precipitate onto the earthed surface 8 of the device.

The voltage applied to the first 2 and second 3 electrodes may be adjusted depending upon the velocity and direction of air movement required.

Additionally, the second electrode 3 may have a cut-out device (not shown) so that when the grid 14 of the electrode is shorted by an insect landing upon it the electrical supply to the first electrode 2 is cut off, thereby stopping the ion wind flow. This would make it more likely that the debris from an electrocuted insect would be retained in the trap and would also act as a safety device. Furthermore, the capture of debris from the electrocuted insects could be ensured by extending the housing beyond the electrode 15 and providing it with an appropriate adhesive coating.

Referring to Fig. 2, another embodiment of an insect trap device 1 according to the present invention is shown.

The device 1 is similar to that shown in Fig. 1 except that the insect retaining means is different. In this embodiment, the second electrode 3 is earthed and is in the form of a tube coated on its inner surface 26 with an adhesive layer. The second electrode 3 has an opening 27 therein which communicates with the atmosphere 5 outside the device 1. The opening 27 is of a size that allows an insect 6 to pass through into the housing 18. When an insect 6 enters the housing 18 via the opening 27 in the second electrode 3 it is influenced by the electrical field 10 between the first electrode 2 and the second electrode 3. The insect 6 accumulates electrical charge in the field and, accordingly, is attracted towards the second electrode 3 and is deposited onto the surface 26 and retained thereon.

The embodiment of the present invention shown in Fig. 2 is suitable for trapping small insects, such as mosquitoes, which behave as small particles when under the influence of an electric field. However, larger insects, such as blowflies and wasps, are less susceptible to the influences of the electric field and, accordingly, the embodiment of the present invention shown in Fig. 1, wherein the insect is electrocuted, is more suitable for such purposes.

The insect trap device according to the present invention has many advantages over the insect trap devices according to the prior art. For example, the trap device according to the present invention does not rely solely on a light source to attract insects. Some light sources in common use can be damaging to human vision because of their ultraviolet content and, furthermore, some flies have now evolved behavioural resistance to light lures.

The presence of an earthed surface limits the shedding of particulate debris into the air after the insect has been killed. Such debris is an undesirable health hazard, especially in food preparation areas.

The insect trap device according to the present invention is less unsightly in operation than fly papers.

Some insect attractant sources, such as Z-(9)-tricosene, are relatively involatile and the ion wind provides an effective means for dispersing the odour of the attractant into the atmosphere.

## Claims

1. An insect trap device (1) comprising a housing (18) having an interior which is in communication with the atmosphere (5) outside the device, the housing containing:
(i) an insect attractant source (7);
(ii) means for generating an ion wind to facilitate dispersal of the insect attractant source (7) into the atmosphere (5) outside the housing (18); and
(iii) insect retaining means.

2. An insect trap device as claimed in claim 1, wherein the means for generating the ion wind comprises a first electrode (2) and a second electrode (3) spaced therefrom to define a region (11) therebetween, such that when an electrical potential is applied across the first and second electrodes an electric field (10) is created in the said region.

3. An insect trap device as claimed in claim 2, wherein the second electrode (3) has at least one opening (4) therein through which the interior of the housing (18) communicates with the atmosphere (5) outside the housing.

4. An insect trap device as claimed in claim 2 or claim 3, wherein the second electrode (3) is a ring electrode, a tubular electrode, a grid electrode, or a combination of one or more thereof.

5. An insect trap device as claimed in any one of claims 2 to 4, wherein the first electrode (2) has a tip.

6. An insect trap device as claimed in any one of claims 2 to 5, wherein the second electrode (3) is earthed.

7. An insect trap device as claimed in any one of claims 2 to 6, wherein the second electrode (3) is coated with an adhesive layer, an insecticide layer, or a combination thereof.

8. An insect trap device as claimed in any one of the preceding claims wherein the insect retaining means comprises a surface in the interior of the device coated with an adhesive layer, an insecticide layer, or a combination thereof.

9. An insect trap device as claimed in any one of claims 2 to 7, wherein the insect retaining means comprises a third electrode (15) positioned adjacent to the second electrode (3) to define a gap (23) therebetween, which gap is capable of being bridged by an insect incident on the second or third electrode.

10. An insect trap device as claimed in claim 9, wherein the third electrode (15) has at least one opening (16) therein through which the interior of the housing (18) communicates with the atmosphere (5) outside the housing.

11. An insect trap device as claimed in claim 9 or claim 10, wherein the third electrode (15) is a ring electrode, a tubular electrode, a grid electrode, or a combination of one or more thereof.

12. An insect trap device as claimed in any one of claims 9 to 11, further comprising a surface (8) coated with an adhesive layer, an insecticide layer, or a combination thereof and positioned adjacent to the second and third electrodes.

13. An insect trap device as claimed in claim 12, wherein the surface (8) is earthed.

14. An insect trap device as claimed in any of claims 2 to 7, wherein the insect retaining means comprises a third electrode positioned substantially between the first (2) and second (3) electrodes in a manner such that an insect which has entered the device may be deposited thereon.

15. An insect trap device as claimed in claim 14, wherein the third electrode is a tubular insert which substantially surrounds the electric field in the region between the first (2) and second (3) electrodes when an electrical potential is applied across the first and second electrodes.

16. An insect trap device as claimed in claim 14 or claim 15, wherein the third electrode (15) is coated with an adhesive layer, an insecticide layer or a combination thereof.

17. An insect trap device as claimed in any one of claims 9 to 16, wherein the third electrode (15) is earthed.

18. An insect trap device as claimed in any one of the preceding claims wherein the insect attractant source (7) is an insect pheromone.

19. An insect trap device as claimed in any one of the preceding claims further comprising a source of heat, light or sound attractive to insects, or a combination thereof.

20. A method of trapping insects comprising the steps of:
(1) providing a housing having an interior which is in communication with the atmosphere outside the housing;
(2) providing an insect attractant source in the interior of the housing;
(3) generating an ion wind in the interior of the housing to facilitate dispersal of the insect attractant source into the atmosphere outside the housing; and
(4) retaining the insects which are attracted to the insect attractant source by means of an insect retaining means provided in the interior of the housing.

21. A method of trapping insects comprising the steps of:
(a) providing an insect trap device as claimed in any one of claims 3 to 19; and
(b) applying an electrical potential across the first and second electrodes such that the resultant electric field in the region therebetween generates an ion wind which flows towards the second electrode, the ion wind facilitating the dispersal of the insect attractant source into the atmosphere outside the housing, whereby insects in the atmosphere outside the housing are attracted to the insect attractant source and pass into the housing through the at least one opening in the second electrode and are retained therein by the insect retaining means.

## Patentansprüche

1. Insektenfallenvorrichtung (1) umfassend ein Gehäuse (18) mit einem Inneren, das mit der Atmosphäre (5) außerhalb der Vorrichtung in Verbindung steht, wobei das Gehäuse umfaßt:
(i) eine Insektenlockmittelquelle (7);
(ii) Mittel zum Erzeugen eines Ionenwinds, um eine Verbreitung der Insektenlockmittelquelle (7) in die Atmosphäre (5) außerhalb des Gehäuses (18) zu fördern; und
(iii) Insektenhaltemittel.

2. Insektenfallenvorrichtung nach Anspruch 1, bei welcher die Mittel zum Erzeugen eines Ionenwinds eine erste Elektrode (2) und eine zweite Elektrode (3) umfassen, die Von dieser mit Abstand angeordnet ist, um einen Bereich (11) dazwischen zu bilden, derart, daß, wenn ein elektrisches Potential zwischen der ersten und zweiten Elektrode angelegt ist, ein elektrisches Feld (10) in dem Bereich erzeugt wird,

3. Insektenfallenvorrichtung nach Anspruch 2, bei welcher die zweite Elektrode (3) wenigstens eine Öffnung (4) darin aufweist, durch welche das Innere des Gehäuses mit der Atmosphäre (5) außerhalb des Gehäuses in Verbindung steht.

4. Insektenfallenvorrichtung nach Anspruch 2 oder Anspruch 3, bei welcher die zweite Elektrode (3) eine Ringelektrode, eine rohrförmige Elektrode, eine Gitterelektrode oder eine Kombination einer oder mehrerer davon ist.

5. Insektenfallenvorrichtung nach einem der Ansprüche 2 bis 4, bei welcher die erste Elektrode (2) eine Spitze aufweist.

6. Insektenfallenvorrichtung nach einem der Ansprüche 2 bis 5, bei welcher die zweite Elektrode (3) geerdet ist.

7. Insektenfallenvorrichtung nach einem der Ansprüche 2 bis 6, bei welcher die zweite Elektrode (3) mit einer Klebeschicht, einer Insektizidschicht oder einer Kombination davon beschichtet ist.

8. Insektenfallenvorrichtung nach einem der vorhergehenden Ansprüche, bei welcher die Insektenhaltemittel eine Fläche im Inneren der Vorrichtung umfassen, die mit einer Klebeschicht, einer Insektizidschicht oder einer Kombination davon beschichtet ist.

9. Insektenfallenvorrichtung nach einem der Ansprüche 2 bis 7, bei welcher die Insektenhaltemittel eine dritte Elektrode (15) umfassen, die benachbart zu der zweiten Elektrode (3) angeordnet ist, um einen Zwischenraum (23) dazwischen zu bilden, welcher Zwischenraum von einem Insekt überbrückt werden kann, das auf die zweiten oder die dritte Elektrode auftrifft.

10. Insektenfallenvorrichtung nach Anspruch 9, bei welcher die dritte Elektrode (15) wenigstens eine Öffnung (16) darin aufweist, durch welche das Innere des Gehäuses (18) mit der Atmosphäre (5) außerhalb des Gehäuses in Verbindung steht.

11. Insektenfallenvorrichtung nach Anspruch 9 oder Anspruch 10, bei welcher die dritte Elektrode (15) eine Ringelektrode, eine rohrförmige Elektrode, eine Gitterelektrode oder eine Kombination einer oder mehrerer davon ist.

12. Insektenfallenvorrichtung nach einem der Ansprüche 9 bis 11 ferner umfassend eine Fläche (8), die mit einer Klebeschicht, einer Insektizidschicht oder einer Kombination davon beschichtet ist und benachbart der zweiten und der dritten Elektrode angeordnet ist.

13. Insektenfallenvorrichtung nach Anspruch 12, bei welcher die Fläche (8) geerdet ist.

14. Insektenfallenvorrichtung nach einem der Ansprüche 2 bis 7, bei welcher die Insektenhaltemittel eine dritte Elektrode umfassen, die und wesentlichen zwischen der ersten (2) und der zweiten (3) Elektrode derart angeordnet ist, daß ein Insekt, das in die Vorrichtung hineingekommen ist, darauf abgelegt werden kann.

15. Insektenfallenvorrichtung nach Anspruch 14, bei welcher die dritte Elektrode ein rohrförmiger Einsatz ist, der das elektrische Feld im Bereich zwischen der ersten (2) und der zweiten (3) Elektrode im wesentlichen umgibt, weg ein elektrisches Potential zwischen der ersten und zweiten Elektrode angelegt ist.

16. Insektenfallenvorrichtung nach Anspruch 14 oder Anspruch 15, bei welcher die dritte Elektrode (15) mit einer Klebeschicht, einer Insektizidschicht oder einer Kombination davon beschichtet ist.

17. Insektenfallenvorrichtung nach einem der Ansprüche 9 bis 16, bei welcher die dritte Elektrode (15) geerdet ist.

18. Insektenfallenvorrichtung nach einem der vorhergehenden Ansprüche, bei welcher die Insektenlockmittelquelle (7) ein Insektpheromon ist.

19. Insektenfallenvorrichtung nach einem der vorhergehenden Ansprüche ferner umfassend eine Quelle von Wärme, Licht oder Geräusch, die Insekten anlockt, oder eine Kombination davon.

20. Verfahren zum Fangen von Insekten, umfassend die Schritte:
(1) Vorsehen eines Gehäuses mit einem Inneren, das mit der Atmosphäre außerhalb des Gehäuses in Verbindung steht;
(2) Vorsehen einer Insektenlockmittelquelle im Inneren des Gehäuses;
(3) Erzeugen eines Ionenwinds im Inneren des Gehäuses, um ein Verbreiten der Insektenlockmittelquelle in die Atmosphäre außerhalb des Gehäuses zu fördern; und
(4) Halten der Insekten, die zu der Insektenlockmittelquelle angelockt worden sind mittels Insektenhaltemitteln, die im Innern des Gehäuses vorgesehen sind.

21. Verfahren zum Fangen von Insekten, umfassend die Schritte:
(a) Vorsehen einer Insektenfallenvorrichtung nach einem der Ansprüche 3 bis 19; und
(b) Anlegen eines elektrischen Potentials zwischen der ersten und zweiten Elektrode derart, daß das resultierende elektrische Feld im Bereich dazwischen einen Ionenwind erzeugt, der zu der zweiten Elektrode strömt, wobei der Ionenwind die Verbreitung der Insektenlockmittelquelle in die Atmosphäre außerhalb des Gehäuses fördert, wodurch Insekten in der Atmosphäre außerhalb des Gehäuses zu der Insektenlockmittelquelle angelockt werden und in das Gehäuse durch die wenigstens eine Öffnung in der zweiten Elektrode eintreten und darin von den Insektenhaltemitteln gehalten werden.

## Revendications

1. Dispositif de piège à insectes (1) comportant une enceinte (18) ayant un intérieur qui est eu communication avec l'atmosphère (5) à l'extérieur du dispositif, l'enceinte contenant :
(i) une source attirant des insectes (7),
(ii) des moyens pour produire un courant ionique afin de faciliter la dispersion de la source attirant des insectes (7) dans l'atmosphère (5) à l'extérieur de l'enceinte (18), et
(iii) des moyens de retenue d'insectes.

2. Dispositif de piège à insectes selon la revendication 1, dans lequel les moyens pour produire le courant ionique comportent une première électrode (2) et une deuxième électrode (3) espacée de celle-ci pour définir une région (11) entre celles-ci, de sorte que lorsqu'un potentiel électrique est appliqué à travers les première et deuxième électrodes, un champ électrique (10) est créé dans ladite région.

3. Dispositif de piège à insectes selon la revendication 2, dans lequel la deuxième électrode (3) comporte au moins une ouverture (4) à travers laquelle l'intérieur de l'enceinte (18) communique avec l'atmosphère (5) à l'extérieur de l'enceinte.

4. Dispositif de piège à insectes selon la revendication 2 ou 3, dans lequel la deuxième électrode (3) est une électrode annulaire, une électrode tubulaire, une électrode eu forme de grille, ou une combinaison d'une ou de plusieurs de celles-ci.

5. Dispositif de piège à insectes selon l'une quelconque des revendications 2 à 4, dans lequel la première électrode (2) a une pointe.

6. Dispositif de piège à insectes selon l'une quelconque des revendications 2 à 5, dans lequel la deuxième électrode (3) est reliée à la terre.

7. Dispositif de piège à insectes selon l'une quelconque des revendications 2 à 6, dans lequel la deuxième électrode (3) est revêtue d'une couche adhésive, d'une couche insecticide, ou d'une combinaison de celles-ci.

8. Dispositif de piège à insectes selon l'une quelconque des revendications précédentes, dans lequel les moyens de retenue d'insectes comportent une surface dans l'intérieur du dispositif revêtue d'une couche adhésive, d'une couche insecticide ou d'une combinaison de celles-ci.

9. Dispositif de piège à insectes selon l'une quelconque des revendications 2 à 7, dans lequel les moyens de retenue d'insectes comportent une troisième électrode (15) positionnée adjacente à la deuxième électrode (3) pour définir un espace (23) entre celles-ci, lequel espace pouvant être traversé par un insecte tombant sur la deuxième ou troisième électrode.

10. Dispositif de piège à insectes selon la revendication 9, dans lequel la troisième électrode (15) comporte au moins une ouverture (16) à travers laquelle l'intérieur de l'enceinte (18) communique avec l'atmosphère (5) à l'extérieur de l'enceinte.

11. Dispositif de piège à insectes selon la revendication 9 ou 10, dans lequel la troisième électrode (15) est une électrode annulaire, une électrode tubulaire, une électrode en forme de grille, ou une combinaison d'une ou de plusieurs de celles-ci.

12. Dispositif de piège à insectes selon l'une quelconque des revendications 9 à 11, comportant de plus une surface (8) revêtue d'une couche adhésive, d'une couche insecticide, ou d'une combinaison de celles-ci et positionnée adjacente aux deuxième et troisième électrodes.

13. Dispositif de piège à insectes selon la revendication 12, dans lequel la surface (8) est reliée à la terre.

14. Dispositif de piège à insectes selon l'une quelconque des revendications 2 à 7, dans lequel les moyens de retenue d'insectes comportent une troisième électrode positionnée pratiquement entre la première (2) et la deuxième (3) électrode d'une manière telle qu'un insecte qui est entré dans le dispositif peut être déposé dessus.

15. Dispositif de piège à insectes selon la revendication 14, dans lequel la troisième électrode est une pièce rapportée tubulaire qui entoure pratiquement le champ électrique dans la région située entre la première (2) et la deuxième (3) électrode lorsqu'un potentiel électrique est appliqué à travers les première et deuxième électrodes.

16. Dispositif de piège à insectes selon la revendication 14 ou 15, dans lequel la troisième électrode (15) est revêtue d'une couche adhésive, d'une couche insecticide ou d'une combinaison de celles-ci.

17. Dispositif de piège à insectes selon l'une quelconque des revendications 9 à 16, dans lequel la troisième électrode (15) est reliée à la terre.

18. Dispositif de piège à insectes selon l'une quelconque des revendications précédentes, dans lequel la source attirant des insectes (7) est une phéromone d'insecte.

19. Dispositif de piège à insectes selon l'une quelconque des revendications précédentes, comportant de plus une source thermique, lumineuse ou sonore qui attire des insectes, ou une combinaison de celles-ci.

20. Procédé pour piéger des insectes comportant les étapes consistant à :
(1) agencer une enceinte ayant un intérieur qui est en communication avec l'atmosphère à l'extérieur de l'enceinte,
(2) agencer une source attirant des insectes à l'intérieur de l'enceinte,
(3) générer un courant ionique dans l'intérieur de l'enceinte pour faciliter la dispersion de la source attirant des insectes dans l'atmosphère à l'extérieur de l'enceinte, et
(4) retenir les insectes qui sont attirés vers la source attirant des insectes par l'intermédiaire de moyens de retenue d'insectes agencés dans l'intérieur de l'enceinte.

21. Procédé pour piéger des insectes comportant les étapes consistant à :
(a) agencer un dispositif de piège à insectes selon l'une quelconque des revendications 3 à 19, et
(b) appliquer un potentiel électrique à travers les première et deuxième électrodes de sorte que le champ électrique résultant dans la région située entre celles-ci génère un courant ionique qui circule vers la deuxième électrode, le courant ionique facilitant la dispersion de la source attirant des insectes dans l'atmosphère à l'extérieur de l'enceinte, de sorte que des insectes se trouvant dans l'atmosphère à l'extérieur de l'enceinte sont attirés vers la source attirant des insectes et passent dans l'enceinte à travers la au moins une ouverture dans la deuxième électrode et sont retenus à l'intérieur par les moyens de retenue d'insectes.
